# EUROPÄISCHE PATENTSCHRIFT

(11) **EP 3 511 268 B1**
(45) Veröffentlichungstag und Bekanntmachung des Hinweises auf die Patenterteilung: **09.08.2023**
(21) Anmeldenummer: 19150969.4
(22) Anmeldetag: 09.01.2019
(51) Int. Cl.: B65G 1/04, G07F 17/12, G06Q 10/08, G07F 7/00

(54) **SENDUNGSLAGER UND VERFAHREN ZUM ÜBERNEHMEN, ZWISCHENLAGERN UND AUSGEBEN VON SENDUNGEN**
SHIPMENT STORAGE AND METHOD FOR ACCEPTANCE, INTERMEDIATE STORAGE AND ISSUING OF SHIPMENTS
STOCKAGE D'ENVOIS ET PROCÉDÉ DE RÉCEPTION, DE STOCKAGE INTERMÉDIAIRE ET DE DISTRIBUTION D'ENVOIS

(30) Priorität: 10.01.2018 DE 102018100448
(43) Veröffentlichungstag der Anmeldung: 17.07.2019
(73) Patentinhaber: Deutsche Post AG, 53113 Bonn (DE)
(72) Erfinder: DAUTZ, Christoph, 53225 Bonn (DE); VON GOSTOMSKI, Markus, 53127 Bonn (DE); MARKERT, Florian, 53227 Bonn (DE); QUILL, Jasmin, 52064 Aachen (DE)
(74) Vertreter: Cohausz & Florack

(56) Entgegenhaltungen:
- EP-A1- 2 876 614
- EP-A1- 3 142 085
- DE-A1- 10 349 469
- DE-A1-102010 042 617
- DE-U1- 29 900 899
- JP-A- H02 158 501
- US-A- 5 072 573
- US-A- 5 149 240

## Beschreibung

### Gebiet

Die Erfindung betrifft ein Sendungslager zum separaten Übernehmen, Zwischenlagern und Ausgeben einer Vielzahl von unterschiedliche Abmessungen aufweisenden Sendungen. Ferner betrifft die Erfindung ein Verfahren zum Betrieb eines Sendungslagers zum separaten Übernehmen, Zwischenlagern und Ausgeben einer Vielzahl von unterschiedliche Abmessungen aufweisenden Sendungen.

### Hintergrund

Sendungslager und Verfahren zu deren Betrieb sind in unterschiedlichen Ausführungen bekannt. Dabei werden in der Regel Sendungen an das Sendungslager übergeben, im Sendungslager zwischengelagert und anschließend wieder ausgegeben. Wenn die Sendungen unterschiedliche Größen aufweisen ist es zudem bekannt die Sendungen in Abhängigkeit ihrer Größe bestimmten Lagerorten zuzuweisen. Um einen unberechtigten Zugriff auf die Sendungen zu vermeiden, kann das Verbringen an die Lagerorte zum Zwischenspeichern der Sendungen und das anschließende Ausgeben der Sendungen automatisiert werden. Dabei wird beim Zwischenlagern der Sendungen oftmals versucht, der zum Zwischenspeichern der Sendungen zur Verfügung stehende Raum möglichst effizient zu nutzen. Dazu werden die Sendungen meist unterschiedlich großen Kompartimenten zugeordnet, je nachdem wie groß die Sendung ist. Dabei gilt grundsätzlich, dass der apparative Aufwand und der Handhabungsaufwand umso mehr ansteigt, je effizienter der zur Verfügung stehende Lagerraum ausgenutzt werden soll, ohne dass hier bereits völlig zufriedenstellende Ergebnisse erhalten werden können.

Sendungslager der genannten Art sind beispielsweise aus der EP 2 876 614 A1, welche die Merkmale des Oberbegriffs der Ansprüche 1 und 9 offenbart, und EP 3 142 085 A1 bekannt. Zudem beschreibt die JP H02 158501 A ein weiteres Sendungslager und die DE 103 49 469 A1 ein Trägerelement für Sendungen.

### Zusammenfassung einiger beispielhafter Ausführungsformen der Erfindung

Der vorliegenden Erfindung liegt die Aufgabe zugrunde, das Sendungslager und das Verfahren jeweils der eingangs genannten und zuvor näher beschriebenen Art derart auszugestalten und weiterzubilden, dass das Zwischenlagern von Sendungen platzsparend und zugleich mit geringem Aufwand erfolgen kann.

Diese Aufgabe ist gemäß Anspruch 1 durch ein Sendungslager gelöst, das zum separaten Übernehmen, Zwischenlagern und Ausgeben einer Vielzahl von unterschiedliche Abmessungen aufweisenden Sendungen ausgebildet ist, mit einer Übergabeeinrichtung zum separaten Übernehmen von Sendungen und zum Übergeben der Sendungen an separate Trägerelemente, insbesondere Tabletts, des Sendungslagers, mit einer Erfassungseinrichtung zum Erfassen von Höhenabmessungen der Sendungen, mit einem Regalsystem umfassend in vertikaler Richtung übereinander angeordneten und Halteebenen definierenden Halteelementen, wobei die Haltelemente und Trägerelemente so korrespondierend ausgebildet sind, dass einerseits auf wenigstens zwei angrenzenden Halteebenen zwei jeweils eine Sendung tragende Trägerelemente in vertikaler Richtung übereinander gehalten sein können und dass andererseits auf wenigstens einer Halteebene ein Trägerelement mit einer Sendung höher als der vertikale Abstand zur nächsthöheren Halteebene gehalten sein kann, wobei wenigstens eine Steuereinrichtung zum Zuweisen von Sendungen aufweisenden Trägerelementen in vertikaler Richtung übereinander zu unterschiedlichen Halteelementen und/oder Lagerpositionen in Abhängigkeit der erfassten Höhenabmessungen der von den Trägerelementen getragenen Sendungen vorgesehen ist und wobei eine Anpassungseinrichtung zum Anpassen einer Breitenabmessung und/oder Längenabmessung der Trägerelemente an wenigstens eine Breitenabmessung und/oder Längenabmessung der zugehörigen Sendungen vorgesehen ist.

Zudem ist die zuvor genannte Aufgabe gemäß Anspruch 9 gelöst durch ein Verfahren zum Betrieb eines Sendungslagers zum separaten Übernehmen, Zwischenlagern und Ausgeben einer Vielzahl von unterschiedliche Abmessungen aufweisenden Sendungen, vorzugsweise unter Verwendung eines Sendungslagers nach einem der Ansprüche 1 bis 8,
- bei dem Sendungen separat mit einer Übergabeeinrichtung übernommen und an separate Trägerelemente, insbesondere Tabletts, übergeben werden,
- bei dem Höhenabmessungen der Sendungen mit einer Erfassungseinrichtung erfasst werden,
- bei dem die Sendungen aufweisenden Trägerelemente mit einer Steuereinrichtung in Abhängigkeit der erfassten Höhenabmessungen in vertikaler Richtung übereinander vorgesehenen Halteebenen definierenden Halteelemente eines Regalsystems so zugewiesen werden, dass auf wenigstens einigen Halteebenen Trägerelemente mit einer Sendung höher als der vertikale Abstand zur nächst höheren Halteebene in vertikaler Richtung übereinander angeordnet werden und
- bei dem eine Breitenabmessung und/oder Längenabmessung der Trägerelemente in einer Anpassungseinrichtung an eine Breitenabmessung und/oder Längenabmessung der zugehörigen Sendungen angepasst werden.

Das Sendungslager kann zum separaten Übernehmen, Zwischenlagern und Ausgeben einer Vielzahl von unterschiedliche Abmessungen aufweisenden Sendungen genutzt werden. Dabei dient der Übernahme der Sendungen durch das Sendungslager eine Übergabeeinrichtung, mit der die Sendungen separat und insbesondere nacheinander Übernommen werden können. Zudem werden die Sendungen über die Übergabereinrichtung, insbesondere nacheinander, an separate Trägerelemente, wie etwa Tabletts, übergeben. Dabei ist eine Erfassungseinrichtung vorgesehen, die wenigstens eine Höhenabmessung der Sendungen erfasst. So können die Sendungen separat mit den Trägerelementen und in Abhängig von der jeweiligen Höhenabmessung zum Lagerort in einem Regalsystem transportiert werden.

Das Regalsystem weist dabei in vertikaler Richtung übereinander angeordnete Halteelement auf, die jeweils übereinander angeordnete Halteebenen definieren. Die Halteelemente sind dabei so ausgebildet, dass in vertikaler Richtung übereinander auf jeder Halteebene ein Trägerelement mit einer Sendung angeordnet werden kann. Die Halteelemente sind aber zudem so ausgebildet, dass auf wenigstens einigen Halteebenen Trägerelemente mit einer Sendung angeordnet werden können, die höher ist als der vertikale Abstand zur nächst höheren Halteebene in vertikaler Richtung, ohne dabei mit dem Halteelement der nächst höheren Halteebene zu kollidieren. Im Übrigen ist noch eine Steuereinrichtung vorgesehen, die die Sendungen aufweisenden Trägerelemente in Abhängigkeit der erfassten Höhenabmessungen der von den Trägerelementen getragenen Sendungen in vertikaler Richtung übereinander zu unterschiedlichen Halteelementen und/oder Lagerpositionen zuordnet.

So wird beispielsweise ein Trägerelement einer Halteebene so zugeordnet, dass die getragene Sendung gerade unter ein weiteres Trägerelement passt. Dies bedeutet beispielsweise, dass zwischen dem Trägerelement und der vertikal darunter angeordneten Sendung ein vertikaler Abstand existiert, der geringer ist als der Abstand zwischen der Halteebene des oberen Trägerelements und der nächsten darunter angeordneten Halteebene. Es kann so auch eine Sendung mit dem zugehörigen Trägerelement so zwischen zwei andere Sendungen im Regelsystem platziert werden, dass der Lagerraum in vertikaler Richtung möglichst vollständig ausgenutzt wird. Da die Höhenabmessung der jeweiligen Sendung und die des Trägerelements bekannt ist, kann die Steuereinrichtung eine platzsparende Anordnung der entsprechenden Trägerelemente im Regalsystem errechnen.

Damit die Sendungen auch in horizontaler Richtung platzsparend nebeneinander angeordnet werden können, beispielsweise in einer gemeinsamen Halteebene, kann die Abmessung der Trägerelemente wenigstens in einer Richtung an die Abmessungen der Sendungen angepasst werden. Hierzu wird sich einer Anpassungseinrichtung bedient, die der Anpassung einer Breitenabmessung und/oder Längenabmessung von Trägerelementen an wenigstens eine Breitenabmessung und/oder Längenabmessung einer Sendung dient, welche von dem jeweiligen Trägerelement getragen wird oder werden soll. Dabei kann die Breitenabmessung und/oder Längenabmessung der Trägerelemente in einfacher Weise durch Einschieben von Trägerelementabschnitten gegeneinander eingestellt werden. Die Anpassung der Trägerelemente an die Sendungen kann dabei so erfolgen, dass die Anpassungseinrichtung und/oder das entsprechende Trägerelement und/oder die Anpassungseinrichtung wenigstens einen Anschlag zur Anlage an die zugehörige Sendung aufweist. Werden die Trägerelemente nun in wenigstens eine Richtung gegeneinander eingeschoben, gelangt der wenigstens eine Anschlag irgendwann in Anlage an die Sendung. Durch diese Anlage kann das weitere Einschieben der Trägerelementabschnitte gegeneinander beendet werden. Beispielsweise kann ein Berührungssensor den Kontakt mit der Sendung erfassen oder es kann ein Abstandssensor genutzt werden, um den Abstand zur Sendung zu erfassen. Es kann aber auch eine Leistung, eine Kraft und/oder ein Drehmoment des motorischen Antriebs zum Einschieben der Trägerelementabschnitte gegeneinander erfasst werden. Wenn dabei erkannt wird, dass vorzugsweise durch die Anlage des wenigstens einen Anschlags an der Sendung ein bestimmter Grenzwert überschritten wird, kann das weitere Einschieben der Trägerelementabschnitte gegeneinander durch eine Steuereinrichtung oder selbstständig beendet werden.

In diesem Zusammenhang versteht es sich, dass die Trägerelemente bevorzugt in einer Richtung und/oder in zwei senkrecht zueinander stehenden Richtungen gegeneinander eingeschoben werden können. Dies ist jedoch nicht zwingend. Zudem können die Trägerelemente auch wieder in die entgegengesetzte Richtung bzw. die entgegengesetzten Richtungen wieder ausgezogen werden. So können die Trägerelemente anschließend wieder zur Aufnahme weiterer Sendungen genutzt, mithin wiederverwendet, werden. Darüber hinaus kann es bevorzugt sein, dass wenigstens ein Trägerelementabschnitt in einen korrespondierenden Trägerelementabschnitt eingeschoben wird, um die Breite und/oder die Länge des Trägerelements zu verringern. Aber auch dies ist nicht zwingend. Die Trägerelementabschnitte können auch so miteinander verbunden sein, dass sie gegeneinander verschiebbar sind, ohne ineinander einzugreifen. Die Trägerelementabschnitte können so beispielsweise übereinander geschoben und/oder gestaucht, etwa zusammengedrückt oder zusammengefaltet werden.

Vorliegend werden unter Sendungen grundsätzlich unterschiedliche Gegenstände verstanden, die vorzugsweise mit überschaubarem Aufwand transportiert werden können. Insbesondere können die Sendungen als Stückgut vorliegen. Dabei kommen Gegenstände des täglichen Bedarfs, wie Verbrauchsmaterialien oder Lebensmittel ebenso in Frage wie technische Gegenstände und Gerätschaften. In vielen Fällen handelt es sich bei den Sendungen um Sendungen eines Postunternehmens, die als Postsendungen bezeichnet werden können. Bedarfsweise handelt es sich bei den Sendungen um Briefsendungen, Paketsendungen und/oder Flyer. Dabei umfassen Paketsendungen auch Päckchen, während Flyer auch Prospekte, Broschüren und Zeitschriften sein können. Zudem kann eine Briefsendung neben einem Brief auch eine Postkarte sein. Bei Paketsendungen und anderen Sendungen handelt es sich in vielen Fällen um umverpackte Güter, wobei dann die Sendung die Verpackung und das darin verpackte Gut umfassen.

Der besseren Verständlichkeit halber und zur Vermeidung von unnötigen Wiederholungen werden nachfolgend das Sendungslager und das Verfahren gemeinsam beschrieben, ohne jeweils im Einzelnen zwischen dem Sendungslager, der Anpassungseinrichtung und dem Verfahren zu unterscheiden. Für den Fachmann ergibt sich jedoch anhand des Kontextes, welches Merkmal jeweils für das Sendungslager, die Anpassungseinrichtung und das Verfahren besonders bevorzugt ist.

Bei dem Sendungslager ist eine Anpassungseinrichtung zum Anpassen einer Breitenabmessung und/oder Längenabmessung der Trägerelemente an wenigstens eine Breitenabmessung und/oder Längenabmessung der zugehörigen Sendungen vorgesehen. Durch die Anpassungseinrichtung kann gewährleistet werden, dass auch schmale und/oder kurze Sendungen mit recht geringem Abstand zueinander im Regalsystem zwischengelagert werden können, ohne dass es dabei zu einer unerwünschten Beeinträchtigung oder Kollision der Trägerelemente untereinander kommt. Dabei ist es konstruktiv im Hinblick auf die Trägerelemente und/oder im Hinblick auf die Anpassungseinrichtung besonders zweckmäßig, wenn die Breitenabmessung und/oder Längenabmessung der Trägerelemente durch Ausziehen und/oder Einschieben von Trägerelementabschnitten gegeneinander einstellbar ist. Um sicherzustellen, dass die Breitenabmessung und/oder Längenabmessung der Trägerelemente relativ zur jeweiligen Sendung nicht zu sehr verringert werden, mithin ein sicheres Tragen der Sendungen durch die Trägerelemente nicht zu gefährden, kann die Anpassungseinrichtung und/oder die Trägerelemente und/oder die Anpassungseinrichtung wenigstens einen Anschlag zur Anlage an die zugehörige Sendung beim Einschieben von Trägerelementabschnitten und Abschaltmittel zum Beenden des weiteren Einschiebens der Trägerelementabschnitte aufweisen. Dabei kann das weitere Einschieben der Trägerelementabschnitte wahlweise bereits vor einem Kontakt des Anschlags mit der Sendung und/oder erst nach dem Kontakt des Anschlags mit der Sendung beendet werden. Dies ist dann abhängig davon, wie der Kontakt oder der bevorstehende Kontakt des Anschlags mit der Sendung erfasst bzw. überwacht wird. Werden beispielsweise Abstandssensoren oder Näherungssensoren verwendet, kann das Einschieben der Trägerelemente schon vor einem Anschlag der Sendung an einem Anschlag beendet werden. Auf den Anschlag und ein Abschalten des Einschiebens der Trägerelemente erst nach einem Kontakt zwischen Sendung und Anschlag kann aber ergänzend gesetzt werden, wenn der Abstandssensor oder Näherungssensor nicht wie gewünscht funktionieren sollte.

Insbesondere wenn die Breitenabmessungen und/oder die Längenabmessungen der Trägerelemente an die Abmessungen der Sendungen angepasst werden, bietet es sich an, dass die Steuereinrichtung zum Zuweisen von Sendungen aufweisenden Trägerelementen zu Lagerpositionen ausgebildet ist. Insbesondere können die Trägerelemente so einer gemeinsamen Halteebene zugewiesen werden, und zwar in Abhängigkeit der Breitenabmessung und/oder Längenabmessung der Trägerelemente und/oder der Sendungen nebeneinander. Die Steuereinrichtung erhält dazu Informationen betreffend der entsprechenden Breitenabmessung und/oder Längenabmessung und des Weiteren Informationen über die noch zur Verfügung stehenden und/oder die bereits belegten Lagerorte. Dies erlaubt der Steuereinrichtung dann die entsprechenden Trägerelementen recht eng nebeneinander anzuordnen, ohne dass die Trägerelemente oder Sendungen kollidieren und ohne zu viel Lagerraum dazwischen ungenutzt zu lassen.

Die effiziente Ausnutzung des Lagerraums muss sich jedoch nicht auf das Einlagern neuer Sendungen beschränken. Vielmehr wird durch das Ausgeben von Sendungen wieder Lagerraum frei. So kann eine effizientere Ausnutzung des Lagerraums bedarfsweise auch dadurch erreicht werden, dass die Trägerelemente des Regalsystems wenigstens teilweise umsortiert werden. So kann beispielsweise ein größerer zusammenhängender Lagerraum bereitgestellt werden, in dem nachfolgend Sendungen wieder mit hoher Flexibilität zwischengelagert werden können, ohne unnötig Lagerraum ungenutzt zu lassen. Die Steuereinrichtung kann also zum effizienteren Ausnutzen des Lagerraums zum Verstellen von wenigstens eine Sendung tragenden Trägerelements von einer Lagerposition zu einer anderen Lagerposition ausgebildet sein.

Alternativ oder zusätzlich kann die Steuereinrichtung dazu ausgebildet sein, Sendungsinformationen, Höhenabmessungen, Breitenabmessung und/oder Längenabmessung der Sendungen, mit den den Sendungen zugeordneten Trägerelementen und/oder den den Sendungen und/oder Trägerelementen zugeordneten Lagerpositionen zu verknüpfen. So kann eine bestimmte Sendung beispielsweise sicher wieder ausgegeben werden. Dies ist insbesondere dann der Fall, wenn eine Sendungsinformation dem zugehörigen Trägerelement zugeordnet ist und die Steuereinrichtung über die aktuelle Lagerposition des entsprechenden Trägerelements informiert ist. Alternativ oder zusätzlich kann auch eine Zuordnung der Sendungsinformationen zu den jeweiligen Lagerpositionen der die Sendungen tragenden Trägerelemente erfolgen. Auch dann ist der Steuereinrichtung stets bekannt, an welcher Lagerposition sich das Trägerelement befindet, welches eine bestimmte Sendung trägt. Sendungsinformationen können dabei beispielsweise den Adressaten der Sendung und/oder den Verwender der Sendung betreffen und/oder bezeichnen. Es kann sich bei der Sendungsinformation alternativ oder zusätzlich auch um einen, vorzugsweise individuellen, Sendungscode und/oder weitere Informationen handeln. Wenn Höhenabmessungen, Breitenabmessung und/oder Längenabmessung der Sendungen mit Trägerelementen und/oder den den Sendungen und/oder Trägerelementen zugeordneten Lagerpositionen zu verknüpfen sind, kann die Steuereinrichtung in einfacher Weise ermitteln an welchen Orten im Regalsystem noch Lagerraum zum Zwischenlagern weiterer Sendungen bereitsteht. Je umfangreicher die Abmessungen der entsprechenden Sendungen bekannt sind, umso genauer kann die Steuereinrichtung ermitteln, wie groß der an bestimmten Orten im Regelsystem noch zur Verfügung stehende Laderaum ist. Dementsprechend kann auch der Laderaum des Regalsystems effizienter ausgenutzt werden.

Zum einfachen und zuverlässigen Erfassen von Abmessungen der Sendungen kann die Erfassungseinrichtung einen Abmessungsscanner zum Erfassen von Höhenabmessungen, Breitenabmessung und/oder Längenabmessung der Sendungen aufweisen. Der Abmessungsscanner kann beispielsweise über wenigstens einen optischen Sensor die entsprechende Abmessung erfassen. Es kann aber auch wenigstens ein Abstandssensor, ein induktiver Sensor und/oder ein kapazitiver Sensor genutzt werden. Alternativ oder zusätzlich kann die Erfassungseinrichtung einen Scanner aufweisen, der die in einem an der Sendung vorgesehenen Speicher gespeicherten Sendungsinformationen ausliest. Je nach Art des Speichers kann der Scanner beispielsweise ein optischer Sensor, ein Barcode-Scanner, ein RFID-Lesegerät und/oder ein NFC-Lesegerät sein, zum Erfassen von Sendungsinformationen, vorzugsweise betreffend den Adressaten, den Verwender, einen, vorzugsweise individuellen, Sendungscode, die Höhenabmessung, die Breitenabmessung und/oder die Längenabmessung. Im Falle der Höhenabmessung, der Breitenabmessung und/oder der Längenabmessung kann diese also an anderer Stelle erfasst und in den Speicher, etwa einen Barcode, an der Sendung geschrieben werden. Die Höhenabmessung, die Breitenabmessung und/oder die Längenabmessung der Sendung kann dann durch Auslesen des Speichers erhalten werden, ohne dass dabei die wenigstes eine Abmessung der Sendung tatsächlich messtechnisch ermittelt werden muss.

Um die Sendungen tragenden Trägerelemente von der Übergabeeinrichtung zu den entsprechenden Lagerpositionen im Regalsystem zu transportieren und/oder die entsprechenden Trägerelemente von den Lagerpositionen zurück zu der Übergabeeinrichtung transportieren zu können, kann eine Transporteinrichtung vorgesehen sein. Dabei bietet es sich aus Gründen der konstruktiven Einfachheit und des flexiblen Handlings der Trägerelemente an, wenn die Transporteinrichtung ein Portalroboter zum Verstellen der Trägerelemente wenigstens in zwei senkrecht zueinander stehenden Raumrichtungen aufweist. Der Portalroboter kann letztlich schnell und präzise sehr unterschiedliche Lagerpositionen abfahren, um dort Trägerelemente zu hinterlassen und/oder abzuholen. Mithin bietet es sich ferner besonders an, wenn der Portalroboter zum Übergeben der Trägerelemente an die Haltelemente und/oder zum Entnehmen der Trägerelemente von den Haltelementen ausgebildet ist.

Die die Halteebenen definierenden Halteelemente können grundsätzlich auf unterschiedliche Arten ausgebildet sein. Beispielsweise kommen Schwenkarme zum Ausschwenken in eine Gebrauchsstellung und zum Einschwenken in eine Nichtgebrauchsstellung in Frage, dabei kann vorgesehen sein, dass ein Schwenkarm, zwei Schwenkarme oder eine an die Breitenabmessung, Längenabmessung und/oder Höhenabmessung der Sendung angepasste Anzahl an Schwenkarmen das entsprechende Trägerelement trägt. Bevorzugt kann es auch sein, wenn die die Halteebenen definierenden Halteelemente zwischen mehreren Gebrauchsstellungen und/oder zwischen wenigstens einer Gebrauchsstellung und wenigstens einer Nichtgebrauchsstellung verschiebbar sind und/oder dass die Halteebenen definierenden Halteelemente demontierbar ist. Dann können die Halteelemente dorthin verschoben oder dort montiert werden, wo ein Trägerelement im Regalsystem gehalten werden soll. Zudem ist es möglich, die Anzahl und Anordnung der Trägerelemente daran anzupassen, wie groß die entsprechende Sendung bzw. das Trägerelement ist. Je größer die Sendung bzw. das Trägerelement ist, desto höher kann die Zahl der verwendeten Halteelemente sein. Es kann aber auch vorgesehen sein, dass die Art der verwendeten Halteelemente an die Größe der Sendung bzw. des Trägerelements angepasst wird. Mit steigender Größe können so beispielsweise größere und/oder stabilere Halteelemente verwendet werden. Haltelemente, die von einer Nichtgebrauchsstellung in eine Gebrauchsstellung verstellt werden müssen, erfordern ebenso wie separate Haltelemente, die erst an der richtigen Stelle im Regalsystem montiert werden müssen, gleichwohl einen höheren Aufwand, und zwar in konstruktiver Hinsicht als auch hinsichtlich der Durchführung des entsprechenden Verfahrens.

Besonders einfach und flexibel ist es daher, wenn die die Halteebenen definierenden Halteelemente durch Aufnahmen zur Aufnahme von Sendungen tragenden Trägerelementen ausgebildet sind. Die Aufnahmen können dabei so ausgestaltet werden, dass nicht genutzte Aufnahmen das Zwischenspeichern von Sendungen im Regalsystem nicht behindern, etwa weil sie weder mit den benachbarten Sendungen noch den benachbarten Trägerelementen im Regalsystem kollidieren. Dies lässt sich besonders einfach und zweckmäßig erreichen, wenn die Aufnahmen in Form von Nuten ausgebildet sind. Die Aufnahmen, insbesondere die Nuten können der Einfachhalt halber zur formschlüssigen Aufnahme von Sendungen tragenden Trägerelementen ausgebildet sein. So kann beispielsweise ein Trägerelement mit einem seiner Ränder in die Aufnahme, insbesondere die Nut gesteckt werden, wo das Trägerelement dann von alleine formschlüssig in Position gehalten wird. Um die Sendungen bzw. Trägerelemente auch nebeneinander sehr flexibel in Bezug auf die Größen der Sendungen im Regalsystem positionieren zu können bietet es sich an, wenn die wenigstes eine Halteebene, vorzugsweise alle Halteebenen durch eine einzige durchgehende Aufnahme und/oder Nut definiert wird. Die Trägerelemente können dann nicht nur an bestimmten vorgegebenen Stellen in einer Halteebene positioniert werden, sondern an sehr vielen verschiedenen Stellen. Insbesondere ist ein stufenloses Positionieren der Trägerelemente entlang der Halteebene möglich.

Besonders einfach ist es, wenn die Trägerelemente dazu ausgebildet sind, horizontal in die Haltelemente, insbesondere in die Nuten, eingeschoben und horizontal wieder aus den Haltelementen herausgezogen zu werden. In diesem Zusammenhang ist lediglich ein Formschluss in vertikaler Richtung erforderlich. Es kann aber auch vorgesehen sein, dass die Trägerelemente in die Haltelemente eingehängt werden, so dass die Haltelemente sowohl horizontal als auch vertikal formschlüssig in dem Haltelement gehalten sind. Zum Entfernen des Trägerelements muss dieses dann zunächst angehoben werden, um den horizontalen Formschluss zu überwinden, bevor es horizontal aus dem Haltelement herausgezogen werden kann. Die Trägerelemente können zum Verbinden mit dem Haltelement beispielsweise Kopfelemente oder U-förmige Halteleisten aufweisen.

Wenn die Übergabeeinrichtung zum separaten Ausgeben von mit Trägerelementen in Lagerpositionen gelagerten Sendungen ausgebildet ist, können die Sendungen in einer Reihenfolge in das Sendungslager übernommen und in einer anderen Reihenfolge wieder aus dem Sendungsmagazin abgegeben werden. Mit anderen Worten kann das Einlagern und/oder das Auslagern einer Sendung unabhängig von dem Einlagern und/oder Auslagern einer vorangegangenen und/oder nachfolgenden Sendung erfolgen.

Damit nicht benötigte Trägerelemente den zur Verfügung stehenden Lagerraum nicht einschränken, kann es zweckmäßig sein, wenn das Sendungslager ein Trägerelementspeicher zum Zwischenspeichern nicht genutzter Trägerelemente umfasst.

Bei dem Verfahren wird eine Breitenabmessung und/oder Längenabmessung der Trägerelemente in einer Anpassungseinrichtung an eine Breitenabmessung und/oder Längenabmessung der zugehörigen Sendungen angepasst. Die Trägerelemente werden vereinfacht gesprochen soweit verkleinert, dass sie die Sendungen noch sicher tragen können. Gleichzeitig wird ermöglicht, dass ein weiteres angrenzendes Trägerelement sehr nahe an der entsprechenden Sendung um Regalsystem platziert werden kann, ohne dass es zu einer unerwünschten Kollision mit einem Trägerelement kommt. Zu diesem Zweck bietet es sich an, wenn die Breitenabmessung und/oder Längenabmessung der Trägerelemente durch Ausziehen und/oder Einschieben von Trägerelementabschnitten gegeneinander verstellt wird. So können bevorzugt die Trägerelementabschnitte eingeschoben werden, bis wenigstens ein Anschlag der Anpassungseinrichtung und/oder des Trägerelements in Anlage an die zugehörige Sendung gelangt und ein Abschaltmittel das weitere Einschieben der Trägerelementabschnitte beendet. Das weitere Einschieben der Trägerelementabschnitte gegeneinander kann auch beendet werden, bevor die Anschlagmittel tatsächlich in Anlage mit der Sendung geraten, wenn beispielsweise ein geeigneter Abstandssensor oder Näherungssensor vorgesehen wird, der erkennt, ob ein Grenzabstand zwischen dem Anschlag, Abstandssensor oder Näherungssensor einerseits und der Sendung andererseits unterschritten wird. Bedarfsweise kann der Grenzabstand sehr gering gewählt werden, so dass bei Unterschreiten des Grenzabstands ein Kontakt zwischen der Sendung und dem Anschlag, Abstandssensor oder Näherungssensor so kurz bevorsteht, dass es wenigstens gelegentlich zu einem solchen, insbesondere leichten, Kontakt kommen kann.

Eine platzsparende Anordnung der Sendungen und Trägerelemente nebeneinander kann erreicht werden, indem die Sendungen aufweisenden Trägerelemente in Abhängigkeit der Breitenabmessung und/oder Längenabmessung der Trägerelemente und/oder der Sendungen von der Steuereinrichtung bestimmten Lagerpositionen nebeneinander zugewiesen werden. Wenn die Trägerelemente auf die zuvor beschriebene Weise einer gemeinsamen Halteebene zugewiesen werden, können die Trägerelemente in ein und derselben Halteebene recht nahe aneinander positioniert werden, um einerseits Lagerraum einzusparen und andererseits eine Kollision der benachbarten Trägerelemente zu vermeiden.

Um eine platzsparende Anordnung der Trägerelemente und der Sendungen im Regalsystem nicht nur bei der Aufnahme von neuen Sendungen, sondern auch beim Abgeben von Sendungen aus dem Regalsystem bereitstellen zu können, können die Trägerelemente des Regalsystems zu geeigneten Anlässen bedarfsweise umsortiert werden, etwa um größere zusammenhängende Bereiche freien Laderaums im Regalsystem zu erzeugen. Mit anderen Worten können wenigstens einzelne Sendungen tragende Trägerelemente in Bezug auf die jeweiligen Lagerpositionen zum effizienteren Ausnutzen des zur Verfügung stehenden Lagerraums vorgegeben durch die Steuereinrichtung umsortiert werden.

Die Handhabung der Sendungen kann zuverlässiger und platzsparender erfolgen, wenn Sendungsinformationen, Höhenabmessungen, Breitenabmessung und/oder Längenabmessung der Sendungen von der Steuereinrichtung den den Sendungen zugeordneten Trägerelementen und/oder den den Sendungen und/oder Trägerelementen zugeordneten Lagerpositionen zugeordnet werden. Es ist dann immer bekannt, an welcher Stelle im Regalsystem sich eine bestimmte Sendung befindet bzw. welche Abmessungen diese Sendungen haben.

Die Höhenabmessungen, Breitenabmessung und/oder Längenabmessung der an das Sendungslager übergebenden Sendungen lassen sich sehr einfach und zuverlässig mit einem Abmessungsscanner erfassen. Dies kann beispielsweise optisch, etwa unter Verwendung einer Kamera, induktiv oder kapazitiv erfolgen. Entsprechende Sensoren und Auswerteeinrichtungen sind am Markt verfügbar.

Alternativ oder zusätzlich können auch Sendungsinformationen, vorzugsweise betreffend den Adressaten, den Verwender und/oder einen, vorzugsweise individuellen, Sendungscode, Höhenabmessungen, Breitenabmessung und/oder Längenabmessung der an das Sendungslager übergebenden Sendungen mit einem Scanner, insbesondere Barcode-Scanner, RFID-Lesegerät und/oder NFC-Lesegerät, der Erfassungseinrichtung erfasst werden. Die entsprechenden Informationen können dazu zuvor in einen Speicher, etwa in Form eines Barcodes, eingeschrieben und dann mittels der Erfassungseinrichtung ausgelesen werden.

Um die die Sendungen aufweisenden Trägerelemente von der Übergabeeinrichtung zu Lagerpositionen und/oder zurück transportieren zu können, kann sich einer Transporteinrichtung bedient werden. Dies ist einfach zu realisieren. Dies ist insbesondere der Fall, wenn die Trägerelemente mit einem Portalroboter der Transporteinrichtung wenigstens in zwei senkrecht zueinander stehenden Raumrichtungen bewegt werden. Alternativ oder zusätzlich kann der Portalroboter einfach und zuverlässig die Trägerelemente entsprechend der vorgegebenen Lagerposition an Haltelemente übergeben und/oder die Trägerelemente zur Ausgabe von Sendungen von den entsprechenden Haltelementen nehmen. Portalroboter sind bekannt, zuverlässig und kostengünstig zu erwerben.

Die Trägerelemente lassen sich bedarfsweise an die Halteebenen definierende Halteelemente in Form von Schwenkarme übergeben, die die Trägerelemente sicher in einer Gebrauchsstellung halten und bei Bedarf in eine Nichtgebrauchsstellung aus dem Weg geschwenkt werden können. Mithin kann vorgesehen sein, dass die Schwenkarme zwischen einer Gebrauchsstellung und einer Nichtgebrauchsstellung hin und her geschwenkt werden. So können die Schwenkarme in der Nichtgebrauchsstellung die Anordnung der Trägerelemente und Sendungen im Regalsystem nicht übermäßig nachteilig beeinträchtigen.

Die Halteebenen definierenden Halteelemente können alternativ oder zusätzlich auch zwischen mehreren Gebrauchsstellungen zum Halten von Trägerelementen und/oder zwischen wenigstens einer Gebrauchsstellung zum Halten eines Trägerelements und wenigstens einer Nichtgebrauchsstellung zur Vermeidung eines unnötigen Blockierens von Laderaum hin und her verschoben werden. So kann beispielsweise eine hohe Flexibilität hinsichtlich der möglichen Lagerpositionen der Trägerelemente erreicht werden, ohne den apparativen Aufwand in Kauf nehmen zu müssen, sehr viele Halteelemente statisch im Regalsystem vorsehen zu müssen. Die Halteelemente können bedarfsweise demontiert werden, wenn sie nicht benötigt werden, und an der Stelle wieder montiert werden, an der sie benötigt werden. Wenn unterschiedliche Arten von demontierbaren Haltelementen vorgesehen sind, können je nach zu haltender Sendung bzw. je nach zu haltendem Trägerelement ein geeignetes Halteelement zur Montage vorgesehen werden. Diese Auswahl des Halteelements kann beispielsweise danach erfolgen, wie groß und/oder schwer die Sendung ist und oder wie groß das zu haltende Trägerelement ist. Die die Halteebenen definierenden Halteelemente können dabei wiederkehrend zum Halten von einem Trägerelement in wenigstens einer Gebrauchsstellungen montiert und zur Vermeidung eines unnötigen Blockierens von Laderaum demontiert werden.

Besonders einfach ist es, wenn die Sendungen tragenden Trägerelemente wenigstens abschnittsweise in die Halteebenen definierenden Halteelemente in Form von Aufnahmen, insbesondere in Form von Nuten, eingeführt werden. Dort können die Trägerelemente dann insbesondere formschlüssig gehalten werden. Eine separate Handhabung von Halteelementen, etwa das Montieren oder Schwenken von Halteelementen kann dann entfallen, was das Verfahren vereinfacht.

Die Trägerelemente können dann bedarfsweise einfach horizontal in die Haltelemente, insbesondere in die Nuten, eingeschoben und horizontal wieder aus den Haltelementen herausgezogen werden. Die Trägerelemente werden dann beispielsweise nur in vertikaler Richtung formschlüssig in dem Haltelement gehalten. Wenn die Trägerelemente in die Haltelemente eingehängt werden, können die Haltelemente sowohl horizontal aus auch vertikal formschlüssig in dem Haltelement gehalten sein. Zum Entfernen des Trägerelements muss dieses dann zunächst angehoben werden, um den horizontalen Formschluss zu überwinden, bevor es horizontal aus dem Haltelement herausgezogen werden kann. Die Trägerelemente können zum Verbinden mit dem Haltelement beispielsweise Kopfelemente oder U-förmige Halteleisten aufweisen.

Die mit den Trägerelementen in Lagerpositionen gelagerten Sendungen können vorzugsweise separat über die Übergabeeinrichtung ausgegeben werden. So kann sowohl für das Übernehmen als auch für das Ausgeben der Sendungen dieselbe Übergabeeinrichtung genutzt werden. Es können aber auch, etwa um ein paralleles Übernehmen und Ausgeben von Sendungen zu ermöglichen, zwei unterschiedliche Übergabeeinrichtungen genutzt werden, und zwar beispielsweise immer eine zum Übernehmen der Sendungen und die andere immer zum Ausgeben der Sendungen.

Um weiter Platz zu sparen und das Verfahren zu vereinfachen, können nicht genutzte Trägerelemente bis zur erneuten Verwendung in einem Trägerelementspeicher zwischengespeichert werden.

Nachfolgend wird die Erfindung anhand einer lediglich Ausführungsbeispiele darstellenden Zeichnung näher erläutert. In der Zeichnung zeigt
- Fig. 1A-B: ein erstes erfindungsgemäßes Sendungslager in einer schematischen Seitenansicht und einer schematischen Draufsicht,
- Fig. 2A-B: eine Anpassungseinrichtung des Sendungslagers aus Fig. 1 und ein zugehöriges Trägerelement jeweils in einer perspektivischen Ansicht und einer Schnittansicht,
- Fig. 3A-B: eine Anpassungseinrichtung mit einem alternativen Trägerelement und ein Detail eines Regalsystems jeweils eines zweiten erfindungsgemäßen Sendungslagers in einer perspektivischen Ansicht,
- Fig. 4A-B: ein Detail eines Regalsystems eines dritten erfindungsgemäßen Sendungslagers in einer perspektivischen Ansicht sowie einer Schnittansicht und
- Fig. 5: ein Detail eines Regalsystems eines vierten erfindungsgemäßen Sendungslagers in einer perspektivischen Ansicht.

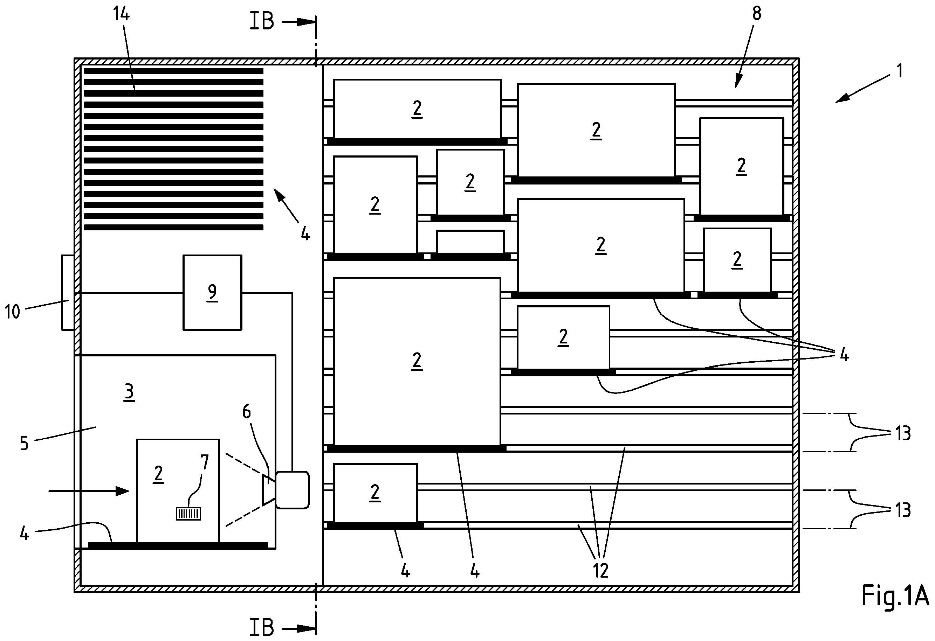

In den Fig. 1A-B ist ein Sendungslager 1 zum Übernehmen, Zwischenlagern und wieder Abgeben von Sendungen 2 dargestellt. Die Sendungen 2 werden zur Übernahme durch das Sendungslager 1 an eine Übergabeeinrichtung 3 übergeben. Dort wird bereits ein Trägerelement 4 in Form eines Tablett bereitgehalten, auf das die zu übernehmende Sendung 2 über eine Öffnung 5 im Sendungslager 1 in der Übergabeeinrichtung 3 abgelegt wird. Eine Erfassungseinrichtung 6 erfasst nun beispielsweise mittels wenigstens eines optischen Sensors eine Höhenabmessung der Sendung 2 und Sendungsinformationen, etwa betreffend den Adressaten oder einen Sendungscode. Die Erfassungseinrichtung 6 kann dabei wenigstens einen, bedarfsweise optischen, Sensor oder Scanner umfassen. Die Sendungsinformationen dienen beispielsweise dazu, dass immer eine ganz bestimmte Sendung 2 wieder aus dem Sendungslager 1 ausgegeben werden kann, und können etwa in einem Barcode 7 auf den Sendungen 2 gespeichert sein. Denkbar ist auch die Speicherung der Sendungsinformationen in einem an der Sendung angebrachten Radio Frequency Identification Tag (RFID-Tag) oder einem Near Field Communication Tag (NFC-Tag). Auslesenrichtungen für solche Tags sind bekannt sowie verfügbar und können sich beispielsweise eines lokalen Funknetzes bedienen.

Die Erfassung der Höhenabmessung dient der platzsparenden Anordnung der Sendung 2 und des Trägerelements 4 in wenigstens einem Regalsystem 8 des Sendungslagers 1. Die Höhenabmessung und die Sendungsinformation werden von einer Steuereinrichtung 9 zur Steuerung des Sendungslagers 1 aufgenommen und verarbeitet. Damit die Sendungen 2 in beliebiger Ausrichtung in der Übergabeeinrichtung 3 platziert werden können, können bedarfsweise an mehreren Seiten der Übergabeeinrichtung 3 wenigstens eine Erfassungseinrichtung 6 angeordnet sein. Alternativ oder zusätzlich können die Sendungsinformationen auch über ein Bedienfeld 10 oder elektronisch übermittelt werden. Bei der elektronischen Übermittlung der Sendungsinformationen können diese beispielsweise in Form eines Codes übermittelt werden. Die Übertragung kann dabei bedarfsweise über ein lokales Funknetz oder ein Mobilfunknetz, insbesondere Global System for Mobile Communication (GSM), Universal Mobile Telecommunications System (UMTS) und/oder Long Term Evolution (LTE), Bluetooth oder Wireless Local Area Network (WLAN).

Zudem wird wenigstens eine Breitendimension der Trägerelemente 4 nach dem Übernehmen von Sendungen 2 durch die Trägerelemente 4 bedarfsweise soweit verringert, bis die entsprechende Breitendimension in vorbestimmter Weise an die Breitendimension der zugehörigen Sendung 2 angepasst ist. Beispielsweise kann vorgesehen sein, dass die Breite der Trägerelemente 4 wenigstens im Wesentlichen der Breite der zugehörigen Sendungen 2 entspricht oder nur geringfügig, insbesondere um ein bestimmtes Maß, größer ist als die entsprechende Breite der zugehörigen Sendungen 2.

Nachdem die Breite des Trägerelements 4 in der zuvor beschriebenen Weise an die Breite der Sendung 2 angepasst worden ist, wird das Trägerelement 4 von einer Transporteinrichtung 11 ergriffen, bei der es sich im dargestellten und insoweit bevorzugten Ausführungsbeispiel um einen Portalroboter handelt, der Bewegungen in drei senkrecht zueinander stehende Raumrichtungen ausführen kann. Die Transporteinrichtung 11 wird von der Steuereinrichtung 9 gesteuert, die anhand der Höhenabmessung der Sendung 2 und der Breitenabmessung der Sendung 2 einen geeigneten, freien Lagerort für die Sendung 2 im Regelsystem 8 des Sendungslagers 1 ermittelt. Dabei wird anhand der Höhenabmessung und der Breitenabmessung der Sendung 2 festgelegt, wieviel Platz, wenigstens in zwei Raumrichtungen, insbesondere horizontal in der Breitenrichtung und vertikal, im Regalsystem 8 für die Sendung 2 bereitstehen muss. Zudem wird berücksichtigt, dass die Sendung 2 bzw. das Trägerelement 4 nicht an beliebigen Positionen, sondern nur an bestimmten Lagerpositionen im Regalsystem 8 positioniert werden kann. Diese Lagerpositionen werden durch Halteelemente 12 bestimmt, die unterschiedliche vertikal übereinander angeordnete Halteebenen 13 definieren.

Beim dargestellten und insoweit bevorzugten Sendungslager 1 werden die Haltelemente 12 durch Aufnahmen in Form von Nuten gebildet, die sich durchgängig wenigstens im Wesentlichen über die Breite des Regelsystems 8 erstecken. Die Haltelemente 12 sind dabei vorzugsweise horizontal ausgerichtet. Die Trägerelemente 4 können entlang der Haltelemente 12 in beliebigen Lagerpositionen positioniert werden. In vertikaler Richtung können die Trägerelemente 4 aber nur auf den entsprechenden Halteebenen 13 in den Haltelementen 12 positioniert werden. Beim dargestellten und insoweit bevorzugten Sendungslager 1 geschieht dies durch Einstecken des Trägerelements 4 in die Haltelemente 12 in Form Aufnahme oder Nut. Dabei ist die vertikale Erstreckung des Trägerelements 4 vorzugsweise geringfügig kleiner als die vertikale Erstreckung der Haltelemente 12. Das Trägerelement 4 wird danach formschlüssig im Haltelement 12 gehalten. Die Transporteinrichtung 11 kann sich daher von dem Trägerelement 4 lösen und beispielsweise ein weiteres Trägerelement 4 an seine von der Steuereinrichtung 9 vorgegebene Lagerposition verbringen. Die Steuereinrichtung 9 gibt die jeweiligen Lagerpositionen so vor, dass der zur Verfügung stehende Lagerraum des Regalsystems 8 möglichst gut ausgenutzt wird. Dies bedingt, dass die Steuereinrichtung 9 Informationen darüber hat, welches Trägerelement 4 mit welcher Sendung 2 an welcher Lagerposition des Regalsystems 8 gelagert ist. Wenn dies bekannt ist, ist auch bekannt, welche Räume des Regalsystems 8 noch frei sind.

Das Ausgeben von Sendungen 2 erfolgt derart, dass die Steuereinrichtung 9 zur Abgabe einer bestimmten Sendung 2 oder zur Abgabe bestimmter Sendungen 2 veranlasst wird. Dies kann durch Eingabe einer mit der jeweiligen Sendung 2 verknüpften Information, insbesondere durch die Eingabe eines Codes, etwa am Bedienfeld 10 des Sendungslagers 1 erfolgen. Alternativ oder zusätzlich kann die Information zum Ausgeben auch im Wege einer elektronischen Übermittlung übermittelt werden, bedarfsweise über ein lokales Funknetz oder ein Mobilfunknetz, insbesondere Global System for Mobile Communication (GSM), Universal Mobile Telecommunications System (UMTS) und/oder Long Term Evolution (LTE), Bluetooth oder Wireless Local Area Network (WLAN). Die mit wenigstens einer Sendung 2 verknüpfte Information, etwa in Form eines Codes, wird von der Steuereinrichtung 9 empfangen, die über die Lagerposition des Trägerelements 4 informiert ist, welches die entsprechende Sendung 2 trägt. Mithin kann die Steuereinrichtung 9 die Transporteinrichtung 11 anweisen, das an der entsprechenden Lagerposition befindliche Trägerelement 4 zu ergreifen und zur Übergabeeinrichtung 3 zu verbringen.

An der Übergabeeinrichtung 3 kann die entsprechende Sendung 2 dann von einem Abholer in Empfang genommen werden. Das Trägerelement 4 verbleibt vorzugsweise in der Übergabeeinrichtung 3 zur Aufnahme einer weiteren Sendung 2 oder wird im Trägerelementspeicher 14 zwischengespeichert, bis es erneut zum Einlagern einer Sendung 2 in dem Sendungslager 1 benötigt wird. So können auch mehrere Sendungen 2 nacheinander ausgegeben werden, ohne dass sich die Trägerelemente 4 in der Übergabeeinrichtung 3 ansammeln. Spätestens in dem Fall, dass mehrere Sendungen 2 nacheinander zum Zwischenspeichern im Sendungslager 1 an die Übergabeeinrichtung 3 übergeben werden, kann bedarfsweise wenigstens für die Übernahme der zweiten und jede weiteren Sendung 2 ein Trägerelement 4 aus dem Trägerelementspeicher 14 entnommen und in die Übergabeeinrichtung 3 zur Aufnahme einer Sendung 2 verbracht werden.

Wenn die Steuereinrichtung 9 erkennt, dass durch wiederholtes Übernehmen und ausgeben im Regalsystem 8 viele Lagerpositionen für die Aufnahme lediglich schmaler oder niedriger Sendungen 2 vorhanden sind, kann die Steuereinrichtung 9 die Trägerelemente 4 teilweise umsortieren und diesen eine abweichende Lagerposition zuweisen, an die die entsprechenden Trägerelemente 4 dann mittels der Transporteinrichtung 11 verbraucht werden. So können Räume im Regelsystem 8 zur Aufnahme hoher und/oder breiter Sendungen 2 geschaffen werden, etwa für den Fall, dass solche Sendungen 2 eingelagert werden sollen. Das beschriebene Umsortieren kann bedarfsweise erfolgen, während das Sendungslager 1 weder zu Ausgabe einer Sendung 2 angefordert ist noch eine Sendung 2 in der Übergabeeinrichtung 3 zum Einlagern im Sendungslager 1 aufweist.

Um das Übernehmen und Ausgeben von Sendungen 2 zu beschleunigen, können anstelle einer einzigen Übergabeeinrichtung 3 auch mehrere, insbesondere zwei, Übergabeeinrichtungen vorgesehen sein. Alternativ oder zusätzlich können aus demselben Grunde anstelle einer einzigen Transporteinrichtung 11 mehrere, insbesondere zwei, Transporteinrichtungen vorgesehen sein, bei denen es sich weiter vorzugsweise jeweils um einen Portalroboter handeln kann.

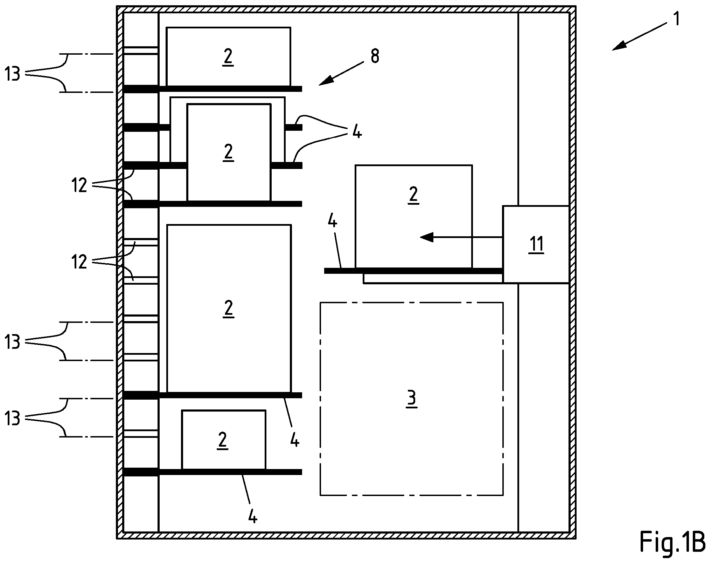

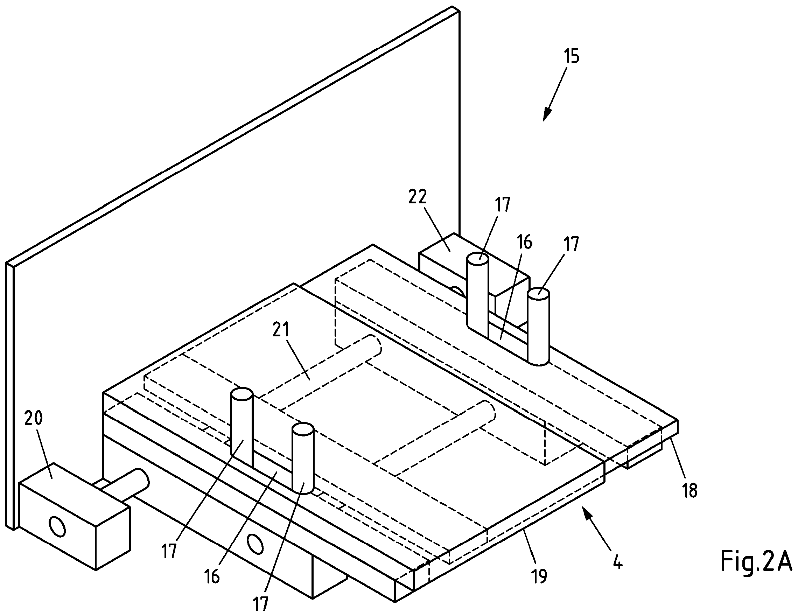

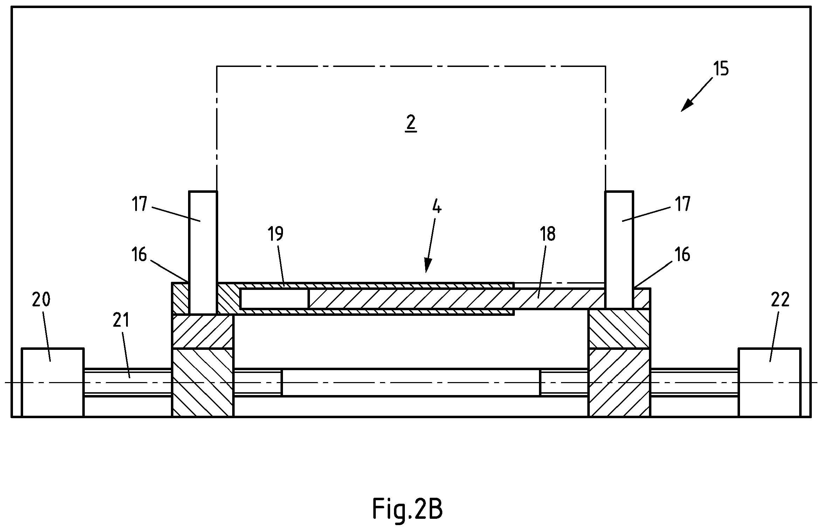

In den Fig. 2A-B ist die Anpassungseinrichtung 15 des Sendungslagers aus Fig. 1 dargestellt, mit dem die Breite der Trägerelemente 4 an die Breite der in der Übergabeeinrichtung 3 aufgenommenen Sendungen 2 angepasst werden. Die Anpassungseinrichtung 15 ist bei dem dargestellten und insoweit bevorzugten Sendungslager 1 in die Übergabeeinrichtung 3 integriert. Weisen die Trägerelemente 4 Aussparungen 16 auf, durch die Anschläge 17 der Anpassungseinrichtung 15 hindurchgreifen und gegenüber dem Trägerelement 4 nach oben vorstehen. Auch dies ist nicht erforderlich, wenn beispielsweise die Anschläge 17 seitlich neben den Trägerelementen 4 vorgesehen wären. Die Trägerelemente 4 weisen zwei Trägerelementabschnitte 18,19 auf. Grundsätzlich könnten es aber auch mehr Trägerelementabschnitte sein. Die Trägerelementabschnitte 18,19 können zusammengeschoben und wieder auseinandergezogen werden, dabei wird ein Trägerelementabschnitte 18 teilweise in dem anderen Trägerelementabschnitte 19 aufgenommen, was bevorzugt aber nicht zwingend ist. Durch das Einschieben der Trägerelementabschnitte 18,19 ineinander wird die Breite des Trägerelements 4 insgesamt verringert.

Das Zusammenschieben des Trägerelements 4 erfolgt mittels eines elektromotorischen Antriebs 20, der beispielsweise einen Spindelantrieb mit einer Spindel 21 umfasst bzw. als Linearantrieb ausgebildet sein kann. Wenn die Trägerelementabschnitte 18,19 ineinander geschoben werden gelangen die Anschläge 17 von gegenüberliegenden Seiten irgendwann in Anlage an die auf dem Trägerelement 4 ruhenden Sendung 2 gelangen. Sodann steigt der Widerstand an, den der elektromotorische Antrieb 20 überwinden muss, um das Trägerelement 4 weiter zusammen zu schieben. Dies führt durch ein entsprechendes Abschaltmittel 22 oder eine Regelung zu einem Beenden des weiteren Zusammenschiebens bzw. zu einem Abschalten der elektromotorischen Antriebs 20. Des Weiteren wird, etwa über die Stellung der Spindel 21, erfasst, auf welche Breitenabmessung das Trägerelement 4 zusammengeschoben worden ist. Diese Information wird von der Steuereinrichtung 9 verarbeitet, um dem Trägerelement 4 einen Lagerposition im Regalsystem 8 zuzuweisen, der breit genug ist, um das Trägerelement 4 aufzunehmen. Zudem stellt die Steuereinrichtung 9 sicher, dass der Lagerposition genügend Platz zugeordnet ist, um darin das Trägerelement 4 und die entsprechende Sendung 2 aufzunehmen. An den Anschlägen 17 könnten auch Abstands- oder Näherungssensoren angebracht sein, um das Zusammenschieben des Trägerelements 4 zu beenden bevor die Anschläge 17 in Anlage an die Sendungen 2 gelangen.

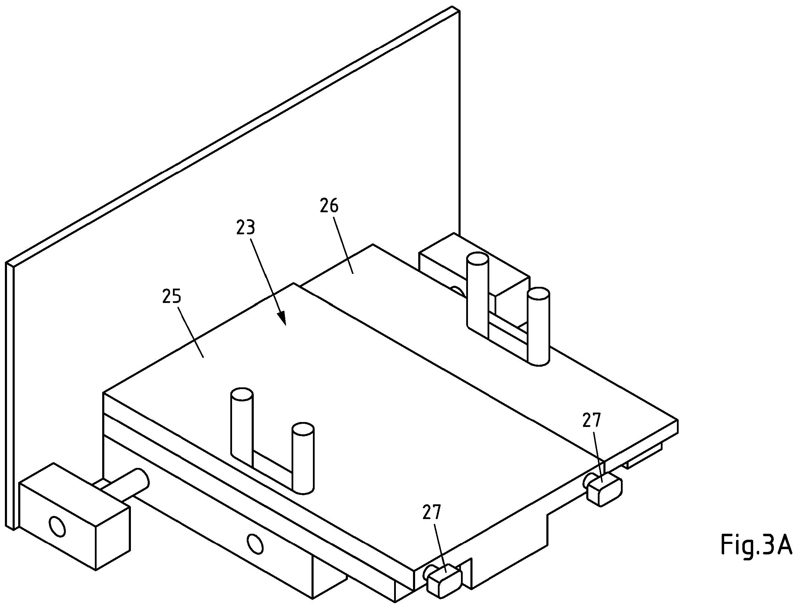

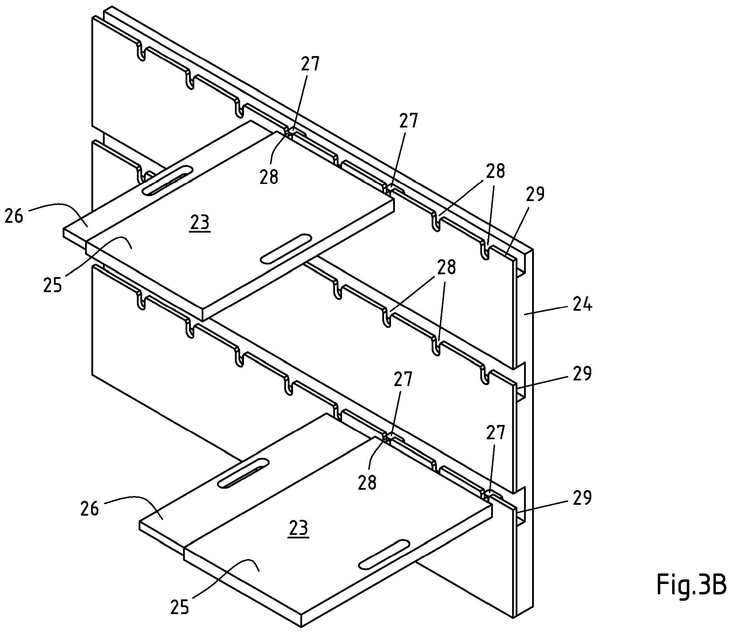

In den Fig. 3A-B sind alternative Trägerelemente 23 und alternative Regalsystem 24 dargestellt. Die Trägerelemente 23 weisen zwei Trägerelementabschnitte 25,26 auf, von denen ein Trägerelementabschnitt 28 zwei parallel zum Trägerelement 23 von diesem nach hinten abstehende Knopfelemente 27 aufweist. Diese lassen sich formschlüssig in korrespondierende Schlitze 28 der Halteelemente 29 einhängen, die in regelmäßigen Abständen verteilt entlang der Halteelemente 29 vorgesehen sind. die Knopfelemente 27 müssen dann in die Haltelemente 29 abgesenkt und zum Entfernen des Trägerelements 23 zunächst wieder nach oben bewegt werden, bevor, das Trägerelement 23 horizontal aus dem Haltelement 29 gezogen werden kann. So wird ein versehentliches Herausrutschen der Trägerelemente 23 aus den Halteelementen 29 vermieden aber in Kauf genommen, dass die Trägerelemente 23 nur in einem bestimmten Raster des Regalsystems 24 angeordnet werden können. Dies ist bei den Haltelementen 12 in Form durchgängiger Nuten wie bei dem Regalsystem 8 gemäß den Fig. 1A-B nicht der Fall. Die Trägerelemente 4 können in den nutenförmigen Haltelementen 12 stufenlos nebeneinander positioniert werden.

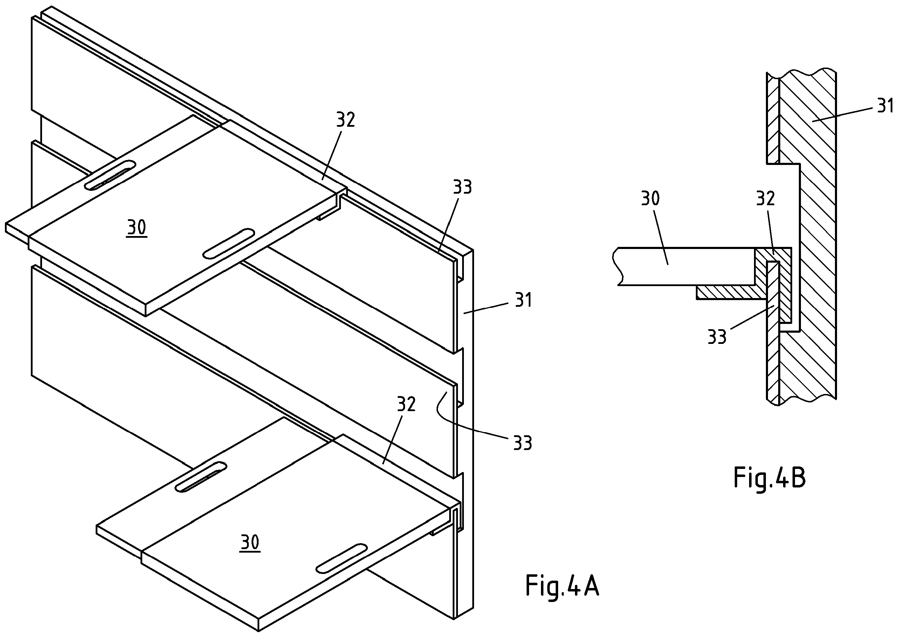

In den Fig. 4A-B sind alternative Trägerelemente 30 und alternative Regalsysteme 31 dargestellt. Die Trägerelemente 30 weisen dabei U-förmige Halteleisten 32 auf, die auf die Halteelemente 33 des zugehörigen Regalsystems 31, in Form durchlaufender Rippen, aufgesteckt werden können. Diese Ausgestaltung von Trägerelement 30 und Regalsystem 31 stellt ein Kompromiss zwischen den Ausgestaltungen gemäß Fig. 1A-B und 3A-B dar. Die Trägerelemente 30 können ohne Berücksichtigung eines Rasters nebeneinander an einem Haltelement 33 festgelegt werden wobei die Trägerelemente 30 gleichzeitig gegenüber einem versehentlichen horizontalen Herausrutschen gesichert sind.

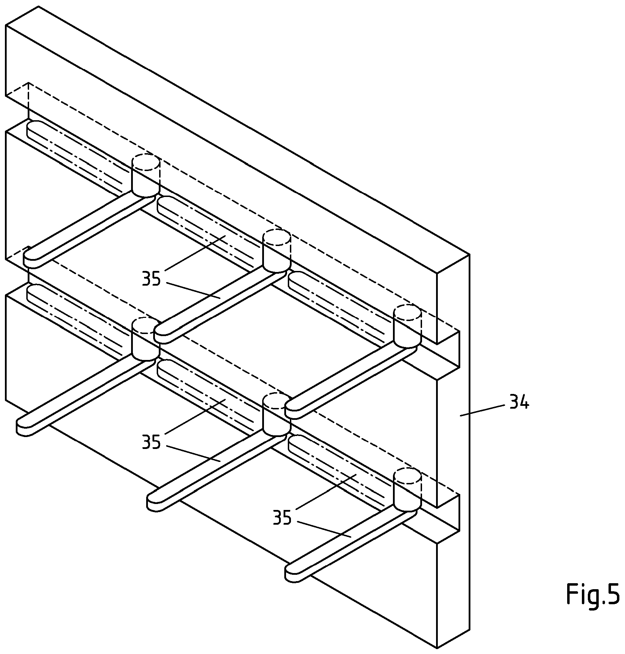

Ebenfalls könnte das Regelsystem 34, wie dies in der Fig. 5 beispielhaft dargestellt ist, Halteelemente 35 in Form von Schwenkarmen aufweisen, die in eine Gebrauchsstellung ausgeschwenkt werden, um ein Trägerelement zu halten, und in eine Nichtgebrauchsstellung eingeschwenkt werden, wenn die Halteelemente 35 nicht zum Halten von Trägerelementen benötigt werden.

### Bezugszeichenliste

- 1: Sendungslager
- 2: Sendung
- 3: Übergabeeinrichtung
- 4: Trägerelement
- 5: Öffnung
- 6: Erfassungseinrichtung
- 7: Barcode
- 8: Regalsystem
- 9: Steuereinrichtung
- 10: Bedienfeld
- 11: Transporteinrichtung
- 12: Halteelement
- 13: Halteebene
- 14: Trägerelementspeicher
- 15: Anpassungseinrichtung
- 16: Aussparung
- 17: Anschlag
- 18,19: Trägerelementabschnitt
- 20: Antrieb
- 21: Spindel
- 22: Abschaltmittel
- 23: Trägerelement
- 24: Regalsystem
- 25,26: Trägerelementabschnitte
- 27: Knopfelement
- 28: Schlitz
- 29: Halteelement
- 30: Trägerelement
- 31: Regalsystem
- 32: Halteleiste
- 33: Haltelement
- 34: Regalsystem
- 35: Haltelement

## Patentansprüche

1. Sendungslager (1) zum separaten Übernehmen, Zwischenlagern und Ausgeben einer Vielzahl von unterschiedliche Abmessungen aufweisenden Sendungen (2), mit einer Übergabeeinrichtung (3) zum separaten Übernehmen von Sendungen (2) und zum Übergeben der Sendungen (2) an separate Trägerelemente (4,23,30), insbesondere Tabletts, des Sendungslagers, mit einer Erfassungseinrichtung (6) zum Erfassen von Höhenabmessungen der Sendungen (2), mit einem Regalsystem (8,24,31,34) umfassend in vertikaler Richtung übereinander angeordneten und Halteebenen (13) definierenden Halteelementen (12,29,33,35), wobei die Haltelemente (12,29,33,35) und Trägerelemente (4,23,30) so korrespondierend ausgebildet sind, dass einerseits auf wenigstens zwei angrenzenden Halteebenen (13) zwei jeweils eine Sendung (2) tragende Trägerelemente (4,23,30) in vertikaler Richtung übereinander gehalten sein können und dass andererseits auf wenigstens einer Halteebene (13) ein Trägerelement (4,23,30) mit einer Sendung (2) höher als der vertikale Abstand zur nächst höheren Halteebene (13) gehalten sein kann, wobei wenigstens eine Steuereinrichtung (9) zum Zuweisen von Sendungen (2) aufweisenden Trägerelementen (4,23,30) in vertikaler Richtung übereinander zu unterschiedlichen Halteelementen (12,29,33,35) und/oder Lagerpositionen in Abhängigkeit der erfassten Höhenabmessungen der von den Trägerelementen (4,23,30) getragenen Sendungen (2) vorgesehen ist,
**dadurch gekennzeichnet, dass**
eine Anpassungseinrichtung (15) zum Anpassen einer Breitenabmessung und/oder Längenabmessung der Trägerelemente (4,23,30) an wenigstens eine Breitenabmessung und/oder Längenabmessung der zugehörigen Sendungen (2) vorgesehen ist.

2. Sendungslager nach Anspruch 1,
**dadurch gekennzeichnet, dass**
die Breitenabmessung und/oder Längenabmessung der Trägerelemente (4,23,30) durch Ausziehen und/oder Einschieben von Trägerelementabschnitten (18,19,25,26) gegeneinander einstellbar ist und dass, vorzugsweise, die Anpassungseinrichtung (15) und/oder die Trägerelemente (4,23,30) und/oder die Anpassungseinrichtung (15) wenigstens einen Anschlag (17) zur Anlage an die zugehörige Sendung (2) beim Einschieben von Trägerelementabschnitten (18,19,25,26) und Abschaltmittel (22) zum Beenden des weiteren Einschiebens der Trägerelementabschnitte (18,19,25,26) aufweist.

3. Sendungslager nach Anspruch 1 oder 2,
**dadurch gekennzeichnet, dass**
die Steuereinrichtung (9) zum Zuweisen von Sendungen (2) aufweisenden Trägerelementen (4,23,30) zu Lagerpositionen, insbesondere einer gemeinsamen Halteebene (13), nebeneinander in Abhängigkeit der Breitenabmessung und/oder Längenabmessung der Trägerelemente (4,23,30) und/oder der Sendungen (2) ausgebildet ist und/oder dass die Steuereinrichtung zum effizienteren Ausnutzen des Lagerraums zum Verstellen von wenigstens eines eine Sendung (2) tragenden Trägerelements (4,23,30) von einer Lagerposition zu einer anderen Lagerposition ausgebildet ist und/oder dass die Steuereinrichtung (9) zum Verknüpfen von Sendungsinformationen, Höhenabmessungen, Breitenabmessung und/oder Längenabmessung der Sendungen (2), mit den den Sendungen (2) zugeordneten Trägerelementen (4,23,30) und/oder den den Sendungen und/oder Trägerelementen (4,23,30) zugeordneten Lagerpositionen ausgebildet ist.

4. Sendungslager nach einem der Ansprüche 1 bis 3,
**dadurch gekennzeichnet, dass**
die Erfassungseinrichtung (6) einen Abmessungsscanner zum Erfassen von Höhenabmessungen, Breitenabmessung und/oder Längenabmessung der Sendungen (2) aufweist und/oder dass die Erfassungseinrichtung (6) einen Scanner, insbesondere Barcode-Scanner, RFID-Lesegerät und/oder NFC-Lesegerät, zum Erfassen von Sendungsinformationen, vorzugsweise betreffend den Adressaten, den Verwender, einen, vorzugsweise individuellen, Sendungscode, die Höhenabmessung, die Breitenabmessung und/oder die Längenabmessung aufweist.

5. Sendungslager nach einem der Ansprüche 1 bis 4,
**dadurch gekennzeichnet, dass**
eine Transporteinrichtung (11) zum Transport der Sendungen (2) aufweisenden Trägerelemente (4,23,30) von der Übergabeeinrichtung (3) zu Lagerpositionen und/oder zurück vorgesehen ist und/oder die Transporteinrichtung (11) ein Portalroboter zum Verstellen der Trägerelemente (4,23,30) wenigstens in zwei senkrecht zueinander stehenden Raumrichtungen aufweist und dass, vorzugsweise, der Portalroboter zum Übergeben der Trägerelemente (4,23,30) an die Haltelemente (12,29,33,35) und/oder zum Entnehmen der Trägerelemente (4,23,30) von den Haltelementen (12,29,33,35) ausgebildet ist.

6. Sendungslager nach einem der Ansprüche 1 bis 5,
**dadurch gekennzeichnet, dass**
die die Halteebenen definierenden Halteelemente (35) Schwenkarme zum Ausschwenken in eine Gebrauchsstellung und zum Einschwenken in eine Nichtgebrauchsstellung ausweisen und/oder dass die Halteebenen definierenden Halteelemente zwischen mehreren Gebrauchsstellungen und/oder zwischen wenigstens einer Gebrauchsstellung und wenigstens einer Nichtgebrauchsstellung verschiebbar sind und/oder dass die Halteebenen definierenden Halteelemente demontierbar ist.

7. Sendungslager nach einem der Ansprüche 1 bis 6,
**dadurch gekennzeichnet, dass**
die die Halteebenen (13) definierenden Halteelemente (12,29,33) durch Aufnahmen, insbesondere in Form von Nuten, zur, insbesondere formschlüssigen, Aufnahme von Sendungen (2) tragenden Trägerelementen (4,23,30) ausgebildet sind und dass, vorzugsweise, wenigstes eine Halteebene (13), vorzugsweise alle Halteebenen (13) durch eine einzige durchgehende Aufnahme und/oder Nut definiert wird.

8. Sendungslager nach einem der Ansprüche 1 bis 7,
**dadurch gekennzeichnet, dass**
die Übergabeeinrichtung (3) zum separaten Ausgeben von mit Trägerelementen (4,23,30) in Lagerpositionen gelagerten Sendungen (2) ausgebildet ist und/oder dass ein Trägerelementspeicher (14) zum Zwischenspeichern nicht genutzter Trägerelemente (4,23,30) umfasst.

9. Verfahren zum Betrieb eines Sendungslagers (1) zum separaten Übernehmen, Zwischenlagern und Ausgeben einer Vielzahl von unterschiedliche Abmessungen aufweisenden Sendungen (2), vorzugsweise unter Verwendung eines Sendungslagers nach einem der Ansprüche 1 bis 8,
- bei dem Sendungen (2) separat mit einer Übergabeeinrichtung (3) übernommen und an separate Trägerelemente (4,23,30), insbesondere Tabletts, übergeben werden,
- bei dem Höhenabmessungen der Sendungen (2) mit einer Erfassungseinrichtung (6) erfasst werden,
- bei dem die Sendungen (2) aufweisenden Trägerelemente (4,23,30) mit einer Steuereinrichtung (9) in Abhängigkeit der erfassten Höhenabmessungen in vertikaler Richtung übereinander vorgesehenen Halteebenen (13) definierenden Halteelementen eines Regalsystems so zugewiesen werden, dass auf wenigstens einigen Halteebenen Trägerelemente (4,23,30) mit einer Sendung (2) höher als der vertikale Abstand zur nächst höheren Halteebene (13) in vertikaler Richtung übereinander angeordnet werden,
**dadurch gekennzeichnet, dass**
- eine Breitenabmessung und/oder Längenabmessung der Trägerelemente (4,23,30) in einer Anpassungseinrichtung (15) an eine Breitenabmessung und/oder Längenabmessung der zugehörigen Sendungen (2) angepasst werden.

10. Verfahren nach Anspruch 9,
- bei dem die Breitenabmessung und/oder Längenabmessung der Trägerelemente (4,23,30) durch Ausziehen und/oder Einschieben von Trägerelementabschnitten (18,19,25,26) gegeneinander verstellt wird und
- bei dem, vorzugsweise, die Trägerelementabschnitte (18,19,25,26) eingeschoben werden, bis wenigstens ein Anschlag (17) der Anpassungseinrichtung (15) und/oder des Trägerelements (4,23,30) in Anlage an die zugehörige Sendung (2) gelangt und ein Abschaltmittel (22) das weitere Einschieben der Trägerelementabschnitte (18,19,25,26) beendet.

11. Verfahren nach Anspruch 9 oder 10,
- bei dem Sendungen (2) aufweisenden Trägerelementen (4,23,30) in Abhängigkeit der Breitenabmessung und/oder Längenabmessung der Trägerelemente (4,23,30) und/oder der Sendungen (2) von der Steuereinrichtung (9) Lagerpositionen, insbesondere einer gemeinsamen Halteebene (13), nebeneinander zugewiesen werden und/oder
- bei dem wenigstens einzelne Sendungen (2) tragende Trägerelemente (4,23,30) in Bezug auf die jeweiligen Lagerpositionen zum effizienteren Ausnutzen des zur Verfügung stehenden Lagerraums vorgegeben durch die Steuereinrichtung (9) umsortiert werden und/oder
- bei dem Sendungsinformationen, Höhenabmessungen, Breitenabmessung und/oder Längenabmessung der Sendungen (2) von der Steuereinrichtung (9) den den Sendungen (2) zugeordneten Trägerelementen (4,23,30) und/oder den den Sendungen (2) und/oder Trägerelementen (4,23,30) zugeordneten Lagerpositionen zugeordnet werden.

12. Verfahren nach einem der Ansprüche 9 bis 11,
- bei dem Höhenabmessungen, Breitenabmessung und/oder Längenabmessung der an das Sendungslager (1) übergebenden Sendungen (2) mit einem Abmessungsscanner einer Erfassungseinrichtung erfasst werden und/oder
- bei dem Sendungsinformationen, vorzugsweise betreffend den Adressaten, den Verwender und/oder einen, vorzugsweise individuellen, Sendungscode, Höhenabmessungen, Breitenabmessung und/oder Längenabmessung der an das Sendungslager (1) übergebenden Sendungen (2) mit einem Scanner, insbesondere Barcode-Scanner, RFID-Lesegerät und/oder NFC-Lesegerät, der Erfassungseinrichtung erfasst werden.

13. Verfahren nach einem der Ansprüche 9 bis 12,
- bei dem die die Sendungen (2) aufweisenden Trägerelemente (4,23,30) mit einer Transporteinrichtung (11) von der Übergabeeinrichtung (3) zu Lagerpositionen und/oder zurück transportiert werden und
- bei dem vorzugsweise die Trägerelemente (4,23,30) mit einem Portalroboter der Transporteinrichtung (11) wenigstens in zwei senkrecht zueinander stehenden Raumrichtungen bewegt werden und/oder entsprechend der vorgegebenen Lagerposition an Haltelemente (12,29,33,35) übergeben und/oder zur Ausgabe von Sendungen (2) von den entsprechenden Haltelementen (12,29,33,35) genommen werden.

14. Verfahren nach einem der Ansprüche 9 bis 13,
- bei dem die Sendungen (2) tragenden Trägerelemente (4,23,30) wenigstens Abschnittsweise in die Halteebenen (13) definierenden Halteelemente (12,29,33,35) in Form von Aufnahmen, insbesondere in Form von Nuten, eingeführt und, vorzugsweise formschlüssig gehalten, werden und/oder
- bei dem die mit Trägerelementen (4,23,30) in Lagerpositionen gelagerten Sendungen (2) separat über die Übergabeeinrichtung (3) ausgegeben werden und/oder
- bei dem die nicht genutzten Trägerelemente (4,23,30) bis zur erneuten Verwendung in einem Trägerelementspeicher (14) zwischenspeichert werden.

## Claims

1. Consignment store (1) for separately accepting, temporarily storing and issuing a plurality of consignments (2) having different dimensions, with a transfer device (3) for separately accepting consignments (2) and for transferring the consignments (2) to separate carrier elements (4, 23, 30), in particular trays, of the consignment store, with a detecting device (6) for detecting height dimensions of the consignments (2), with a shelf system (8, 24, 31, 34) comprising holding elements (12, 29, 33, 35), which are arranged one above the other in a vertical direction and which define holding levels (13), wherein the holding elements (12, 29, 33, 35) and carrier elements (4, 23, 30) are designed to correspond such that, on the one hand, on at least two adjoining holding levels (13), two carrier elements (4, 23, 30) each carrying a consignment (2) can be held one above the other in a vertical direction and in that, on the other hand, on at least one holding level (13), there can be held a carrier element (4, 23, 30) with a consignment (2) taller than the vertical distance to the next higher holding level (13), wherein at least one control device (9) is provided for assigning carrier elements (4, 23, 30) holding consignments (2) in a vertical direction one above the other to different holding elements (12, 29, 33, 35) and/or storage positions as a function of the detected height dimensions of the consignments (2) carried by the carrier elements (4, 23, 30), **characterised in that** an adapting device (15) is provided for adapting a width dimension and/or length dimension of the carrier elements (4, 23, 30) to at least one width dimension and/or length dimension of the associated consignments (2).

2. Consignment store according to claim 1, **characterised in that** the width dimension and/or length dimension of the carrier elements (4, 23, 30) can be adjusted by pulling out and/or pushing in carrier element sections (18, 19, 25, 26) relative to one another and **in that**, preferably, the adapting device (15) and/or the carrier elements (4, 23, 30) and/or the adapting device (15) has at least one stop (17) for abutment against the associated consignment (2) during the pushing-in of carrier element sections (18, 19, 25, 26) and deactivating means (22) for ending the further pushing-in of the carrier element sections (18, 19, 25, 26).

3. Consignment store according to claim 1 or 2, **characterised in that** the control device (9) is designed to assign carrier elements (4, 23, 30) holding consignments (2) to storage positions, in particular to a common holding level (13), next to one another as a function of the width dimension and/or length dimension of the carrier elements (4, 23, 30) and/or of the consignments (2) and/or **in that**, to more efficiently utilise the storage space, the control device is designed to adjust at least one carrier element (4, 23, 30) holding a consignment (2) from one storage position to another storage position and/or **in that** the control device (9) is designed to link consignment information, height dimensions, width dimension and/or length dimension of the consignments (2) to the carrier elements (4, 23, 30) assigned to the consignments (2) and/or to the storage positions assigned to the consignments and/or carrier elements (4, 23, 30).

4. Consignment store according to any one of claims 1 to 3, **characterised in that** the detecting device (6) has a dimension scanner for detecting height dimensions, width dimension and/or length dimension of the consignments (2) and/or **in that** the detecting device (6) has a scanner, in particular barcode scanner, RFID reader and/or NFC reader, for detecting consignment information, preferably relating to the addressee, the user, a, preferably individual, consignment code, the height dimension, the width dimension and/or the length dimension.

5. Consignment store according to any one of claims 1 to 4, **characterised in that** a transport device (11) is provided for transporting the carrier elements (4, 23, 30) holding consignments (2) from the transfer device (3) to storage positions and/or back and/or the transport device (11) has a portal robot for adjusting the carrier elements (4, 23, 30) at least in two spatial directions perpendicular to one another and **in that**, preferably, the portal robot is designed to transfer the carrier elements (4, 23, 30) to the holding elements (12, 29, 33, 35) and/or to remove the carrier elements (4, 23, 30) from the holding elements (12, 29, 33, 35).

6. Consignment store according to any one of claims 1 to 5, **characterised in that** the holding elements (35), which define the holding levels, have swivel arms for pivoting out into a use position and for pivoting in into a non-use position and/or in that the holding elements, which define holding levels, can be displaced between a plurality of use positions and/or between at least one use position and at least one non-use position and/or **in that** the holding elements, which define holding levels, can be dismounted.

7. Consignment store according to any one of claims 1 to 6, **characterised in that** the holding elements (12, 29, 33), which define holding levels (13), are formed by receptacles, in particular in the form of grooves, for receiving, in particular in a form-fitting manner, carrier elements (4, 23, 30) holding consignments (2) and **in that**, preferably, at least one holding level (13), preferably all holding levels (13), is defined by a single continuous receptacle and/or groove.

8. Consignment store according to any one of claims 1 to 7, **characterised in that** the transfer device (3) is designed for separately issuing consignments (2) stored with carrier elements (4, 23, 30) in storage positions and/or **in that** comprises a carrier element storage device (14) for temporarily storing unused carrier elements (4, 23, 30).

9. Method for operating a consignment store (1) for separately accepting, temporarily storing and issuing a plurality of consignments (2) having different dimensions, preferably using a consignment store according to any one of claims 1 to 8,
- in which consignments (2) are accepted separately with a transfer device (3) and transferred to separate carrier elements (4, 23, 30), in particular trays,
- in which height dimensions of the consignments (2) are detected with a detecting device (6),
- in which the carrier elements (4, 23, 30) holding consignments (2) are assigned with a control device (9) as a function of the detected height dimensions to holding elements, which define holding levels (13) and are arranged one above the other in a vertical direction, of a shelf system such that, on at least some holding levels, carrier elements (4, 23, 30) with a consignment (2) taller than the vertical distance to the next higher holding level (13) are arranged one above the other in the vertical direction, **characterised in that**
- a width dimension and/or length dimension of the carrier elements (4, 23, 30) are adapted in an adapting device (15) to a width dimension and/or length dimension of the associated consignments (2).

10. Method according to claim 9,
- in which the width dimension and/or length dimension of the carrier elements (4, 23, 30) is adjusted by pulling out and/or pushing in carrier element sections (18, 19, 25, 26) relative to one another and
- in which, preferably, the carrier element sections (18, 19, 25, 26) are pushed in until at least one stop (17) of the adapting device (15) and/or of the carrier element (4, 23, 30) comes into abutment with the associated consignment (2) and a deactivating means (22) ends the further pushing-in of the carrier element sections (18, 19, 25, 26).

11. Method according to claim 9 or 10,
- in which carrier elements (4, 23, 30) holding consignments (2) are assigned by the control device (9) to storage positions, in particular to a common holding level (13), next to one another as a function of the width dimension and/or length dimension of the carrier elements (4, 23, 30) and/or of the consignments (2) and/or
- in which at least individual carrier elements (4, 23, 30) holding consignments (2) are re-sorted in relation to the respective storage positions for more efficient use of the available storage space in a manner predefined by the control device (9) and/or
- in which consignment information, height dimensions, width dimension and/or length dimension of the consignments (2) are assigned by the control device (9) to the carrier elements (4, 23, 30) assigned to the consignments (2) and/or to the storage positions assigned to the consignments (2) and/or carrier elements (4, 23, 30).

12. Method according to any one of claims 9 to 11,
- in which height dimensions, width dimension and/or length dimension of the consignments (2) transferred to the consignment store (1) are detected with a dimension scanner of a detecting device and/or
- in which consignment information, preferably relating to the addressee, the user and/or a, preferably individual, consignment code, height dimensions, width dimension and/or length dimension of the consignments (2) transferred to the consignment store (1) are detected with a scanner, in particular barcode scanner, RFID reader and/or NFC reader, of the detecting device.

13. Method according to any one of claims 9 to 12,
- in which the carrier elements (4, 23, 30) holding the consignments (2) are transported by a transport device (11) from the transfer device (3) to storage positions and/or back and
- in which preferably the carrier elements (4, 23, 30) are moved with a portal robot of the transport device (11) at least in two spatial directions perpendicular to one another and/or are transferred to holding elements (12, 29, 33, 35) corresponding to the predefined storage position and/or taken from the corresponding holding elements (12, 29, 33, 35) for issuing of consignments (2).

14. Method according to any one of claims 9 to 13,
- in which the carrier elements (4, 23, 30) holding consignments (2) are inserted, at least in sections, into the holding elements (12, 29, 33, 35), which define holding levels (13), in the form of receptacles, in particular in the form of grooves, and held preferably in a form-fitting manner, and/or
- in which the consignments (2) stored with carrier elements (4, 23, 30) in storage positions are issued separately via the transfer device (3) and/or
- in which the unused carrier elements (4, 23, 30) are temporarily stored in a carrier element storage device (14) until they are reused.

## Revendications

1. Entrepôt d'expédition (1) pour la prise en charge, le stockage intermédiaire et la distribution séparément d'une multitude de colis (2) de dimensions différentes, avec un dispositif de transfert (3) pour la prise en charge séparée de colis (2) et pour le transfert des colis (2) à des éléments porteurs séparés (4, 23, 30), notamment des plateaux, des entrepôts d'expédition, avec un dispositif de détection (6) pour détecter les dimensions en hauteur des colis (2), avec un système d'étagères (8, 24, 31, 34) comportant des éléments de retenue (12, 29, 33, 35) agencés superposés dans le sens vertical et définissant des plans de retenue (13), les éléments de retenue (12, 29, 33, 35) et les éléments porteurs (4, 23, 30) étant conçus de manière correspondante de telle sorte que, d'une part, sur au moins deux plans de retenue (13) adjacents, deux éléments porteurs (4, 23, 30) portant chacun un colis (2) peuvent être maintenus superposés dans le sens vertical et en ce que, d'autre part, sur au moins un plan de retenue (13), un élément porteur (4, 23, 30) avec un colis (2), qui est plus haut que la distance verticale au plan de retenue (13) immédiatement supérieur, peut être retenu, au moins un dispositif de commande (9) étant prévu pour attribuer les éléments porteurs (4, 23, 30) portant les colis (2), superposés dans le sens vertical, à différents éléments de retenue (12, 29, 33, 35) et/ou positions de stockage en fonction des dimensions en hauteur détectées des colis (2) portés par les éléments porteurs (4, 23, 30), **caractérisé en ce que** l'on prévoit un dispositif d'adaptation (15) pour adapter une dimension en largeur et/ou en longueur des éléments porteurs (4, 23, 30) à au moins une dimension en largeur et/ou en longueur des colis correspondants (2).

2. Entrepôt d'expédition selon la revendication 1, **caractérisé en ce que** la dimension en largeur et/ou en longueur des éléments porteurs (4, 23, 30) peuvent être réglées, l'une par rapport à l'autre, par l'extraction et/ou l'introduction de sections d'éléments porteurs (18, 19, 25, 26) et **en ce que**, de préférence, le dispositif d'adaptation (15) et/ou les éléments porteurs (4, 23, 30) et/ou le dispositif d'adaptation (15) présentent au moins une butée (17) en appui contre le colis correspondant (2) lors de l'introduction de sections d'éléments porteurs (18, 19, 25, 26) et de moyens d'arrêt (22) pour terminer l'introduction ultérieure des sections des éléments porteurs (18, 19, 25, 26).

3. Entrepôt d'expédition selon la revendication 1 ou 2, **caractérisé en ce que** le dispositif de commande (9) est conçu pour attribuer des éléments porteurs (4, 23, 30) portant des colis (2) à des positions de stockage, notamment à un plan de retenue commun (13), côte à côte, en fonction de la dimension en largeur et/ou en longueur des éléments porteurs (4, 23, 30) et/ou des colis (2) et/ou **en ce que** le dispositif de commande est conçu pour exploiter plus efficacement l'espace de stockage en déplaçant au moins un élément porteur (4, 23, 30) portant un colis (2) d'une position de stockage à une autre position de stockage et/ou **en ce que** le dispositif de commande (9) est conçu pour associer les informations d'expédition, les dimensions en hauteur, la dimension en largeur et/ou la dimension en longueur des colis (2) aux éléments porteurs (4, 23, 30) associés aux colis (2) et/ou aux positions de stockage associées aux colis et/ou aux éléments porteurs (4, 23, 30).

4. Entrepôt d'expédition selon l'une des revendications 1 à 3, **caractérisé en ce que** le dispositif de détection (6) présente un scanner de dimension pour détecter les dimensions en hauteur, la dimension en largeur et/ou la dimension en longueur des colis (2) et/ou **en ce que** le dispositif de détection (6) présente un scanner, notamment un lecteur de code-barres, un lecteur RFID et/ou un lecteur NFC, pour détecter les informations d'expédition, de préférence concernant le destinataire, l'utilisateur, un numéro de suivi, de préférence individuel, la dimension en hauteur, en largeur et/ou en longueur.

5. Entrepôt d'expédition selon l'une des revendications 1 à 4, **caractérisé en ce que** l'on prévoit un dispositif de transport (11) pour le transport des éléments porteurs (4, 23, 30) portant des colis (2) du dispositif de transfert (3) à des positions de stockage et/ou inversement et/ou le dispositif de transport (11) présente un robot portique pour le réglage des éléments porteurs (4, 23, 30), au moins dans deux directions spatiales perpendiculaires entre elles, et **en ce que**, de préférence, le robot portique est conçu pour transférer les éléments porteurs (4, 23, 30) aux éléments de retenue (12, 29, 33, 35) et/ou pour enlever les éléments porteurs (4, 23, 30) des éléments de retenue (12, 29, 33, 35).

6. Entrepôt d'expédition selon l'une des revendications 1 à 5, **caractérisé en ce que** les éléments de retenue (35) définissant les plans de retenue présentent des bras pivotants pour le pivotement vers l'extérieur, dans une position d'utilisation, et pour le pivotement vers l'intérieur, dans une position de non d'utilisation, et/ou en ce que les éléments de retenue définissant les plans de retenue peuvent être déplacés entre plusieurs positions d'utilisation et/ou entre au moins une position d'utilisation et au moins une position de non-utilisation et/ou **en ce que** les éléments de retenue définissant les plans de retenue peuvent être démontés.

7. Entrepôt d'expédition selon l'une des revendications 1 à 6, **caractérisé en ce que** les éléments de retenue (12, 29, 33) définissant les plans de retenue (13) sont conçus par des logements, notamment sous forme de gorges, pour loger, notamment par complémentarité de forme, les éléments de retenue (4, 23, 30) portant des colis (2), et **en ce que**, de préférence, au moins un plan de retenue (13), de préférence tous les plans de retenue (13), sont définis par un seul logement continue et/ou une seule gorge continue.

8. Entrepôt d'expédition selon l'une des revendications 1 à 7, **caractérisé en ce que** le dispositif de transfert (3) est conçu pour la distribution séparée de colis (2) stockés avec des éléments porteurs (4, 23, 30) dans des positions de stockage et/ou **en ce qu'**il comporte une unité de stockage d'éléments porteurs (14) pour l'entreposage intermédiaire d'éléments porteurs (4, 23, 30) non utilisés.

9. Procédé pour l'exploitation d'un entrepôt d'expédition (1) pour la prise en charge, le stockage intermédiaire et la distribution séparément d'une multitude de colis (2) de dimensions différentes, de préférence en utilisant un entrepôt d'expédition selon l'une des revendications 1 à 8,
- dans lequel les colis (2) sont pris en charge, séparément, par un dispositif de transfert (3) et transférés à des éléments porteurs (4, 23, 30) séparés, notamment à des plateaux,
- dans lequel les dimensions en hauteur des colis (2) sont détectées à l'aide d'un dispositif de détection (6),
- dans lequel les éléments porteurs (4, 23, 30) portant les colis (2) sont attribués, à l'aide d'un dispositif de commande (9), en fonction des dimensions en hauteur détectées, à des éléments de retenue d'un système d'étagères définissant des plans de retenue (13), prévus superposés dans le sens vertical, de telle sorte que, sur au moins certains plans de retenue, les éléments porteurs (4, 23, 30) avec un colis (2), qui est plus hauts que la distance verticale par rapport au plan de retenue (13) immédiatement supérieur, soient agencés, superposés dans le sens vertical, **caractérisé en ce que**
- une dimension en largeur et/ou en longueur des éléments porteurs (4, 23, 30) dans un dispositif d'adaptation (15) est adaptée à une dimension en largeur et/ou en longueur des colis (2) associés.

10. Procédé selon la revendication 9,
- dans lequel la dimension en largeur et/ou en longueur des éléments porteurs (4, 23, 30) sont réglées, l'une par rapport à l'autre, par extraction et/ou introduction de sections d'éléments porteurs (18, 19, 25, 26) et
- dans lequel, de préférence, les sections des éléments porteurs (18, 19, 25, 26) sont introduites jusqu'à ce qu'au moins une butée (17) du dispositif d'adaptation (15) et/ou des éléments porteurs (4, 23, 30) soit en appui contre le colis (2) correspondant et qu'un moyen d'arrêt (22) termine l'introduction ultérieure des sections des éléments porteurs (18, 19, 25, 26).

11. Procédé selon la revendication 9 ou 10,
- dans lequel les éléments porteurs (4, 23, 30) portant les colis (2) sont attribués côte à côte, en fonction de la dimension en largeur et/ou en longueur des éléments porteurs (4, 23, 30) et/ou des colis (2), par le dispositif de commande (9) à des positions de stockage, notamment à un niveau de retenue (13) commun et/ou
- dans lequel au moins des éléments porteurs (4, 23, 30) portant les colis (2) individuels sont triés par le dispositif de commande (9) en fonction des positions de stockage respectives afin d'exploiter plus efficacement l'espace de stockage disponible et/ou
- dans lequel les informations d'expédition, les dimensions en hauteur, la dimension en largeur et/ou la dimension en longueur des colis (2) sont attribuées par le dispositif de commande (9) aux éléments porteurs (4, 23, 30) associés aux colis (2) et/ou aux positions de stockage associées aux colis (2) et/ou aux éléments porteurs (4, 23, 30).

12. Procédé selon l'une des revendications 9 à 11,
- dans lequel les dimensions en hauteur, la dimension en largeur et/ou la dimension en longueur des colis (2) transférés à l'entrepôt d'expédition (1) sont détectées à l'aide d'un scanner de dimension d'un dispositif de détection et/ou
- dans lequel les informations d'expédition concernant, de préférence, le destinataire, l'utilisateur et/ou un numéro de suivi, de préférence individuel, les dimensions en hauteur, la dimension en largeur et/ou la dimension en longueur des colis (2) transférés à l'entrepôt d'expédition (1) sont détectées à l'aide d'un scanner, notamment un lecteur de code-barres, un lecteur RFID et/ou un lecteur NFC, du dispositif de détection.

13. Procédé selon l'une des revendications 9 à 12,
- dans lequel les éléments porteurs (4, 23, 30) présentant les colis (2) sont transportés avec un dispositif de transport (11) du dispositif de transfert (3) vers des positions de stockage et/ou inversement et
- dans lequel, de préférence, les éléments porteurs (4, 23, 30) sont déplacés par un robot portique du dispositif de transport (11) au moins dans deux directions spatiales perpendiculaires entre elles et/ou sont transférés aux éléments de retenue (12, 29, 33, 35) conformément à la position de stockage prédéterminée et/ou prélevés par les éléments de retenue (12, 29, 33, 35) correspondants pour la distribution des colis (2).

14. Procédé selon l'une des revendications 9 à 13,
- dans lequel les éléments porteurs (4, 23, 30) portant les colis (2) sont introduits, au moins par sections, dans les éléments de retenue (12, 29, 33, 35) définissant les plans de retenue (13) sous forme de logements, notamment sous forme de gorges, et, de préférence retenus par complémentarité de forme, et/ou
- dans lequel les colis (2) stockés avec les éléments porteurs (4, 23, 30) dans des positions de stockage sont distribués séparément à l'aide du dispositif de transfert (3) et/ou
- dans lequel les éléments porteurs (4, 23, 30) non utilisés sont entreposés, de manière intermédiaire, dans une unité de stockage d'éléments porteurs (14) jusqu'à leur réutilisation.
